# EUROPEAN PATENT APPLICATION

(11) **EP 3 483 015 A1**
(43) Date of publication of application: **15.05.2019**
(21) Application number: 17472002.9
(22) Date of filing: 21.12.2017
(51) Int. Cl.: B60R 25/33, B62H 5/20, G01S 19/16

(54) **WATERPROOF AND SHOCK-RESISTANT GPS TRACKER**

(30) Priority: 14.11.2017 BG 112621
(71) Applicant: Siti Eood, 9300 Dobrich (BG)
(72) Inventor: Devetakov, Tihomir Radev, 9300 Dobrich (BG)

(57) **Abstract**

Real-time tracking device for protection and prevention of theft of bicycles, electric bicycles or electric scooters, waterproof and shock-resistant, stationary fixed by means of a firm bolted or riveted connection. Electric power supply via voltaic solar photocells in combination with an autonomous rechargeable battery. Integrated temperature sensor as well as vibration and shock sensor. LED display with indication of FREE or ALARM mode as well as battery charge level. Identification of object ownership using data stored on the device's integrated memory. Possibility for setup from mobile phone and tablet via BLUETOOTH and password for controlled access. Android-supported mobile app for smartphone and tablet - Google **Play/IOS** - App Store.

## Description

Unfortunately, the theft of bicycles, electric bicycles and electric scooters is a common phenomenon as preventive and protective safety locks do not ultimately deter thieves. The common GPS trackers are a solution to prevent theft, tracking the thief, and recovering the stolen object, but existing ones have quite a few drawbacks such as a relatively short battery life as well as necessity of replacement or recharge; unprotected housing that can be broken or manipulated; insufficient water resistance, etc.

In the event of theft, the owner of the object is the only victim loses who the whole amount of money paid to purchase it. Unfortunately, if the object is detected by the police it is difficult for the real owner to prove that this is exactly his bicycle because of the lack of frame number or other property proving attribute on the object. That is why theft of bicycles, electric bicycles and electric scooters results in a very low probability of return to their owners and therefore insurance is almost not offered as a product by insurance companies for this type of objects.

Therefore, the device described here takes up the challenge to solve the above disadvantages.

### BRIEF DESCRIPTION OF THE INVENTION

It is a device designed to protect and prevent a bicycle, electric bicycle or electric scooter from stealing. In case of encroachment and theft, by means of sensors and GPS tracking the device sends location requests in the form of SMS via the GSM cellular network, the GPRS standard of the cellular GSM network, or via WiFi of the cellular GSM network using GPS (Global Positioning System), and reports requests from a server using topographical software such as GOOGLE EARTH, etc., thus preventing the theft and making possible the guilty person to be identified and subsequently captured by the police authorities. Easy and quickly activation of the device via a password-protected BLUETOOTH wireless connection from a mobile app for Android-supported smartphone and tablet - Google Play / IOS - App Store. Identification of object ownership using data stored on the device's integrated memory. Autonomous power supply for months through voltaic solar photocells in combination with a rechargeable battery and a battery charge level indicator. Robust housing fixed to the frame - the body of the object by means of a firm bolted or riveted connection in combination with water and impact resistance as well as a high degree of protection against vulnerability and impact.

Thus, the very existence of the device mounted on a bicycle, electric bicycle or electric scooter shall act as a prevention measure and deter any thief from further actions.

The following detailed description of the course of action and execution in the accompanying drawings will illustrate many other aspects and advantages of the device.

### BRIEF DESCRIPTION OF THE FIGURES

The details and execution described as well as their advantages can be best understood by reference to the following description in connection with the accompanying drawings. These drawings do not limit in any way the changes in shape and detail that may be made by experts in that field without departing from the spirit and scope of the execution described.
FIG. 1A presents the overall appearance of the device - a robust waterproof and shock-resistant housing in combination with photovoltaic solar-cell panels fixed thereto.
FIG. 1B presents the oval back of the devise - bottom, to be fastened to the frame.
FIG. 1C presents the way to open the front - cover of the device to perform operation manipulations - insertion of a SIM card or replacing and recharging the battery.
FIG. 1D presents the way to open the back - bottom of the device to perform operation manipulations - insertion of a SIM card or replacing and recharging the battery.
FIG. 1E presents the device fixed to the frame - the body of the object (bicycle, electric bicycle).
FIG. 1F presents the interior of the front - cover of the device.
FIG. 1G presents the way the back - bottom of the device is fixed to a bicycle or electric bicycle's frame.
FIG. 1H presents the way the back - bottom of the device is fixed to any electric scooter's flat side.
FIG. 1J presents how its individual components (front side of the operating printed circuit board) are technically executed.
FIG. 1K presents how its individual components (back of the operating printed circuit board) are technically executed.
FIG. 2A presents the principle of operation of the device and the interaction between its components.

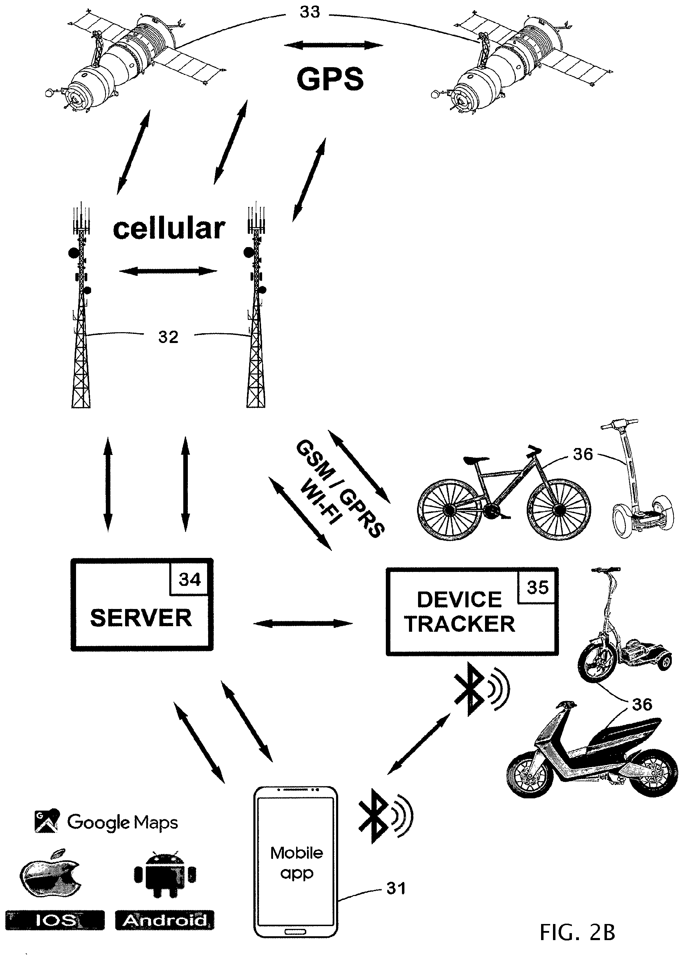

FIG. 2B presents various objects that can use the device - bicycle, electric bicycle or electric scooter, as well as how the device connects to the server and Android-supported app for smartphone and tablet - Google Play / IOS - App Store to track the location by sending location queries in the form of SMS over the GSM cellular network, GPRS standard of the cellular GSM network, or via WiFi of the cellular GSM network using GPS (Global Positioning System). The coordinates obtained are entered into any topographic software such as GOOGLE EARTH, etc., and so the exact location of the object is determined.

### TECHNICAL NATURE OF THE INVENTION

The IP6 waterproof rated and shock-resistant device for real time tracking and protection against theft of bicycles, electric bicycles and electric scooters is fixed to the frame - the body of the object via a firm bolted or riveted connection. The fixation area remains inside the device and there is a locking mechanism used, which locks the two main parts of the device - bottom and cover, so it remains visible to the thief, however it warns him and prevents his instinctive intentions to steal the object. The oval shape at the bottom of the device implies universal fixation to frames of bicycles and electric bicycles of any size and model. The power supply by means of voltaic solar photocells in combination with an autonomous rechargeable battery and a battery charge level indicator implies a continuous operation for several months. Through the integrated impact sensor the device responds to acts of thieves and vandals, and the integrated temperature sensor responds to nitrogen attacks on the locking mechanism. LED display on the housing with indication of FREE or ALARM mode and battery charge level.

In the event of absence of registration numbers on the object, the ownership can be identified by data entered in the device memory as it is permanently fixed to the object.

The device functions by sending location requests in the form of SMS over the GSM cellular network, the GPRS standard of the cellular GSM network, or via WiFi of the cellular GSM network using GPS (Global Positioning System). The obtained coordinates are entered into any topographic software such as GOOGLE EARTH, etc., and so the exact location of the object is determined.

Set-up possibility using BLUETOOTH via a controlled access password and activation of operation modes via an Android-supported mobile app for smartphone and tablet - Google Play / IOS - App Store:
- FREE operation mode - the object is in motion and used by the owner, positioning is performed in this mode but no signal is transmitted through the GSM network. The user (owner) can periodically activate the data transmission modes remotely to monitor the motion of the object, receive data about the technical condition of the device, or make various settings.
- ALARM operation mode - in this mode, the subject is parked and its coordinates are automatically recorded. The integrated temperature sensor or vibration and impact sensor is activated and the device reports changed coordinates through GPS (Global Positioning System). This happens when the coordinates change compared to the last determined, but the device only sends data to an authorized user. When activating the ALARM operation mode, the notified authorized user alerts the police by reporting an attack on the object and possible theft. An authorized user may be the owner or his authorized representative.

When the object is traced by the police, the last coordinates reported by the device are transmitted to identify the thief through public video surveillance.

When the battery's capacity drops below 20%, the device sends signals with each message sent, reminding that charging or battery change is required, and the battery level indicator activates.

These and other aspects and features are illustrated below on the figures shown.

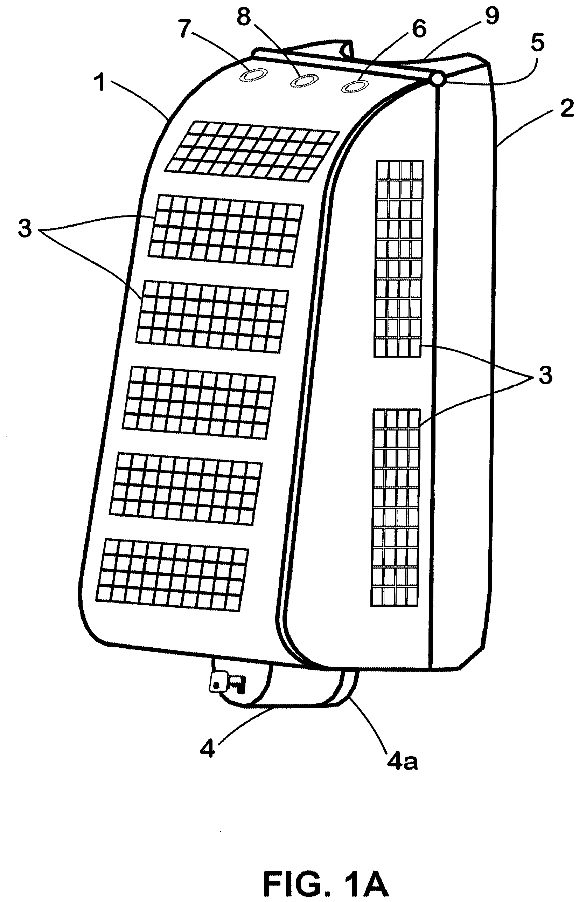

FIG. 1A shows the housing of the device, which can be made of aluminium, duralumin or technical plastic, and presents the overall appearance of the device, where clearly discernable are the front - cover of the device /1/ and the back - bottom /2/. The two parts are connected to each other via a hinge connection /5/ at the top, and by a locking mechanism /4/ and the lock /4a/ at the bottom. In this way, the device can be opened to perform operation manipulations - inserting a SIM card or replacing and recharging the battery. On the outside of the front - cover of the device /1/ are mounted voltaic solar photocells - panels /3/ which can be monocrystalline or polycrystalline. In the upper part of the device's cover /1/ are installed LED indicators for the FREE /6/ and ALARM /7/ operation modes as well as for the battery charge level /8/, as the locking mechanism /4/ and the lock /4a/ are located at the bottom. The oval shape /9/ at the back - bottom of the device /2/ implies universal fixation to frames of bicycles and electric bicycles of any size and model.

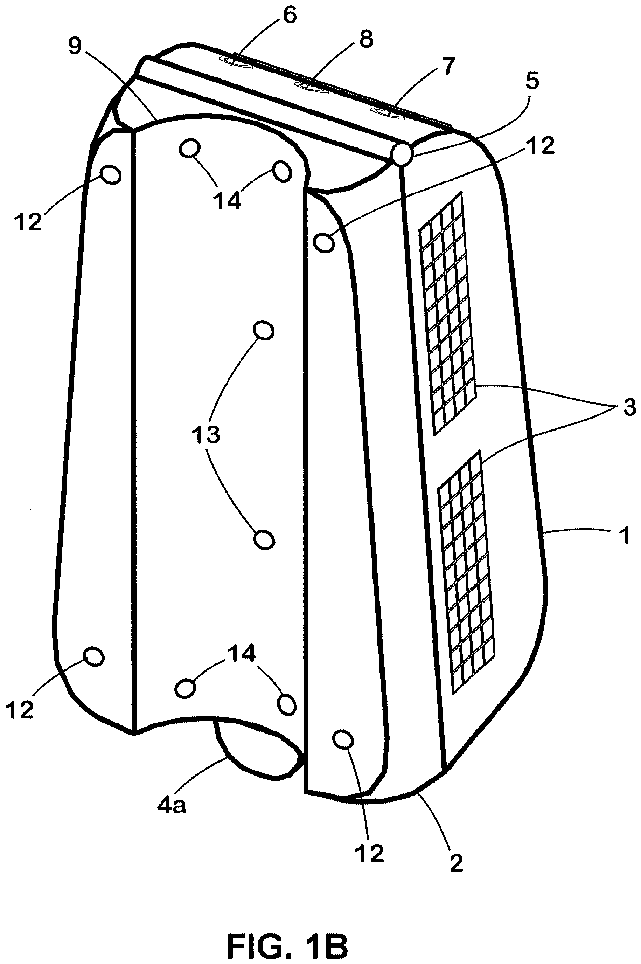

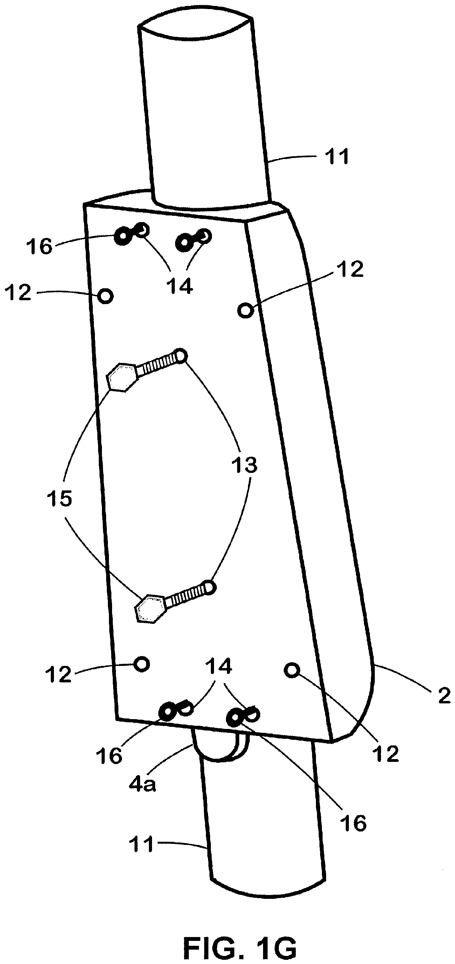

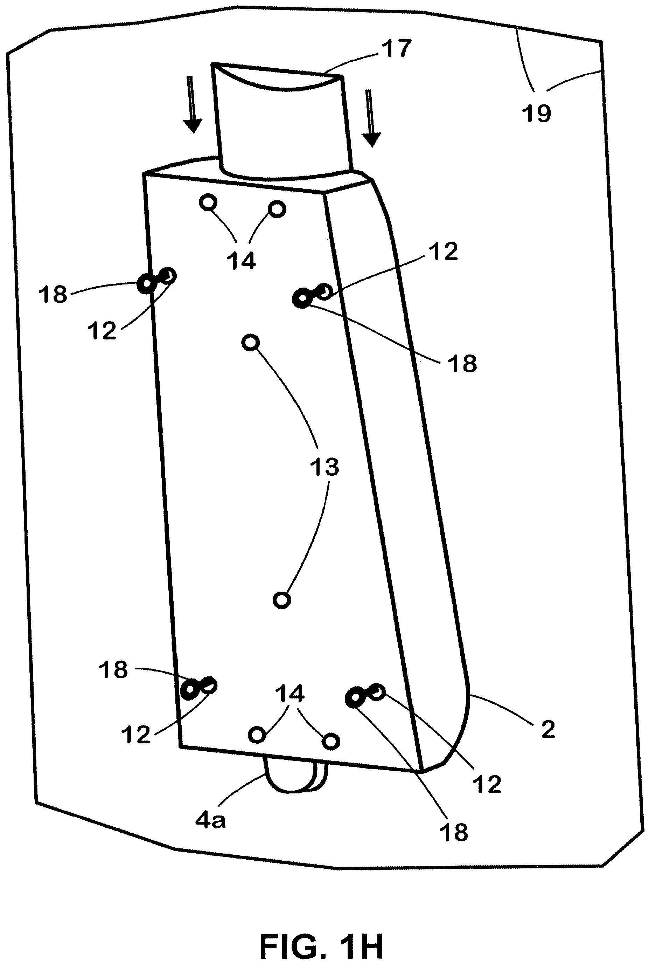

In FIG. 1B, the oval shape /9/ is shown more clearly, where through openings /13/ the device can be directly mounted on the bicycle frame using bolts at the place designated for placement of water bottle cages. In the event of absence of such factory-made openings on the bicycle frame, it is possible to mount the device on the bicycle frame through openings /14/ using a riveted connection, as the method of mounting is shown in FIG.1G. Openings /12/ are used to mount the device on electric scooter, as the method of mounting using rivets is shown in FIG. 1H.

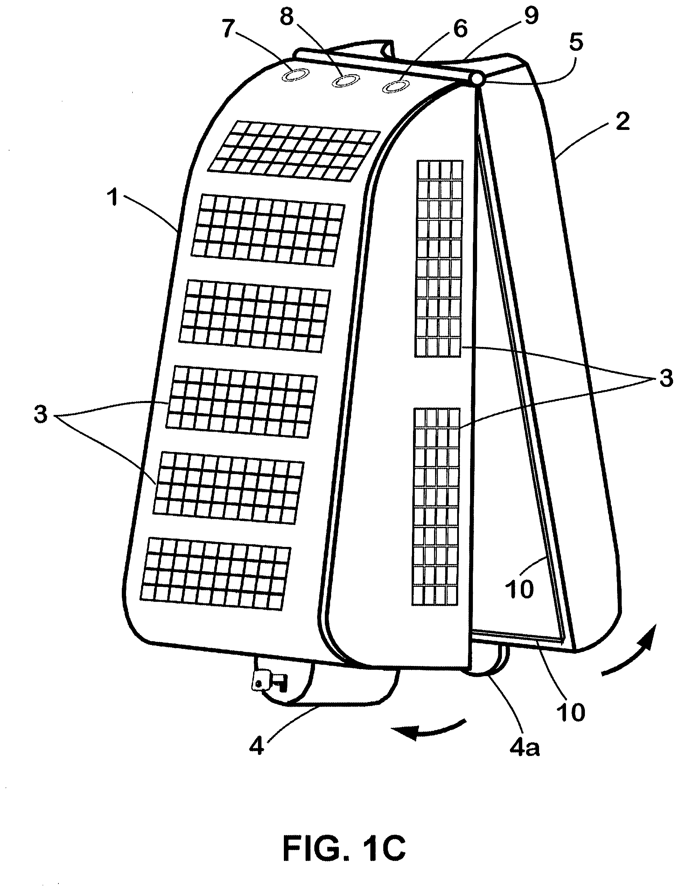

FIG. 1C shows how to open the front - cover of the device to perform operation manipulations - inserting a SIM card or replacing and recharging the battery. The device is protected from rain through the rubber seal /10/ that achieves an IP6 waterproof rating when the front of the device /1/ is locked to the back - bottom of the device /2/ by means of the hinge connection /5/ at the top, and at the bottom - after locking them by means of the locking mechanism /4/ and the lock /4a/.

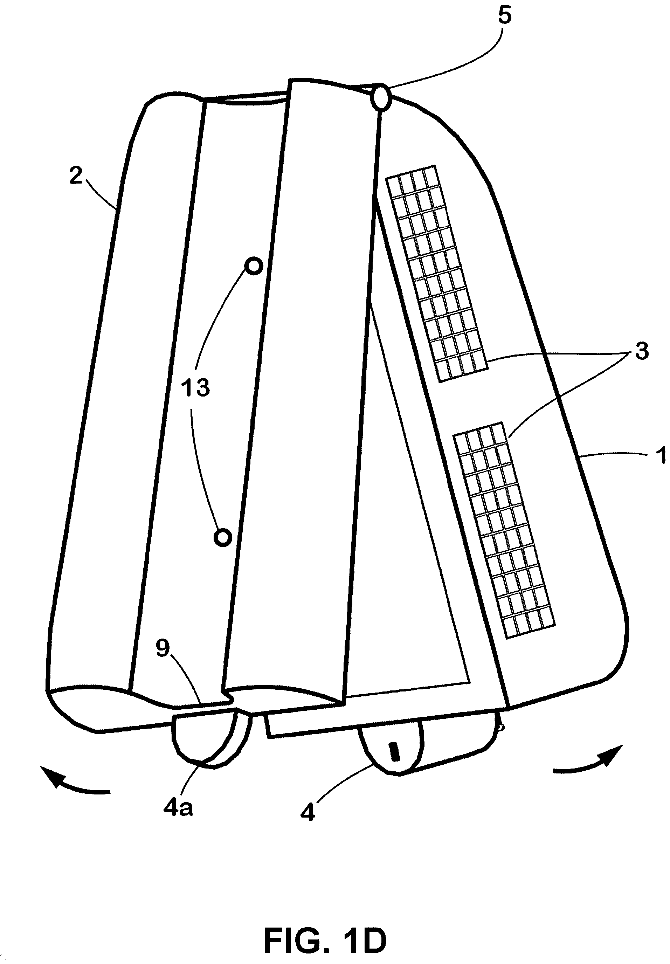

FIG. 1D shows how to open the back - bottom of the device to perform operation manipulations - inserting a SIM card or replacing or recharging the battery. The coupling and locking of the front of the device /1/ to the back - bottom of the device /2/ is performed through the hinge connection /5/ at the top of the device, and at the bottom - after locking them by the locking mechanism /4/ and the lock /4a/.

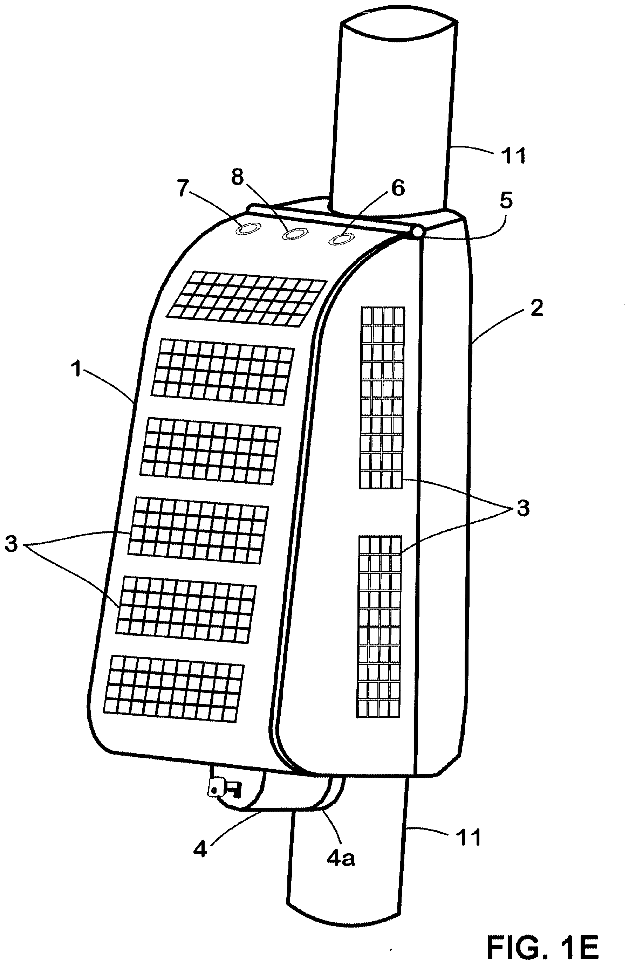

FIG. 1E shows the device fixed to the frame /11/ - body of the object, either bicycle or electric bicycle. External installation is not a problem since the device is waterproof and shock-resistant and its very existence will have a preventive measure and will deter the thief from further action.

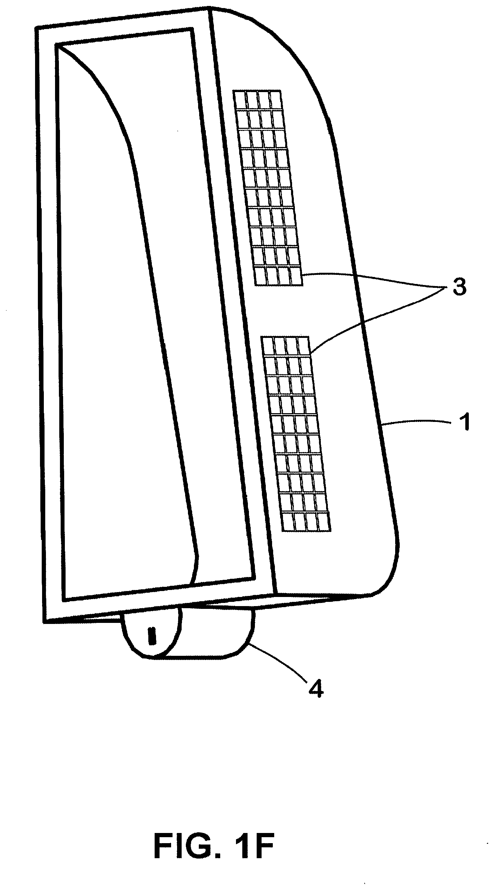

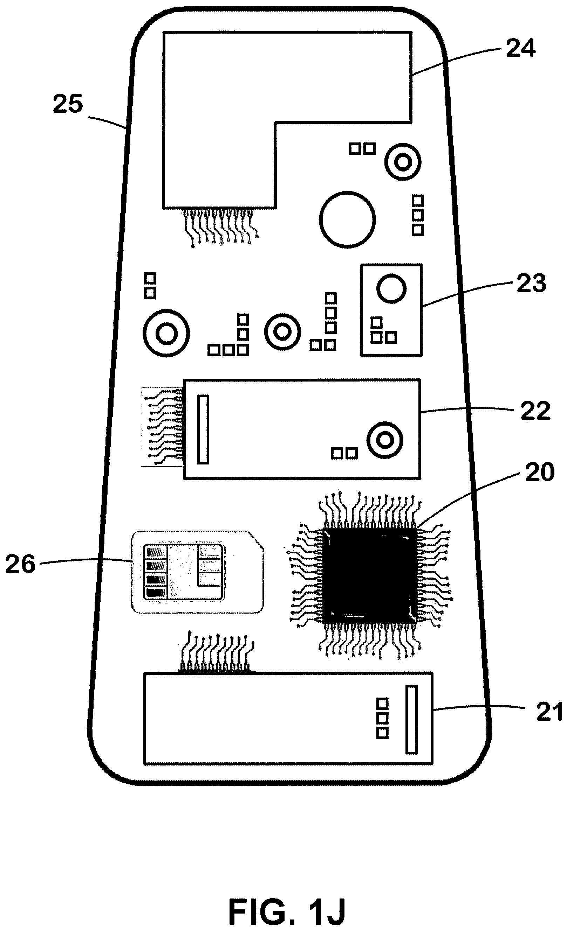

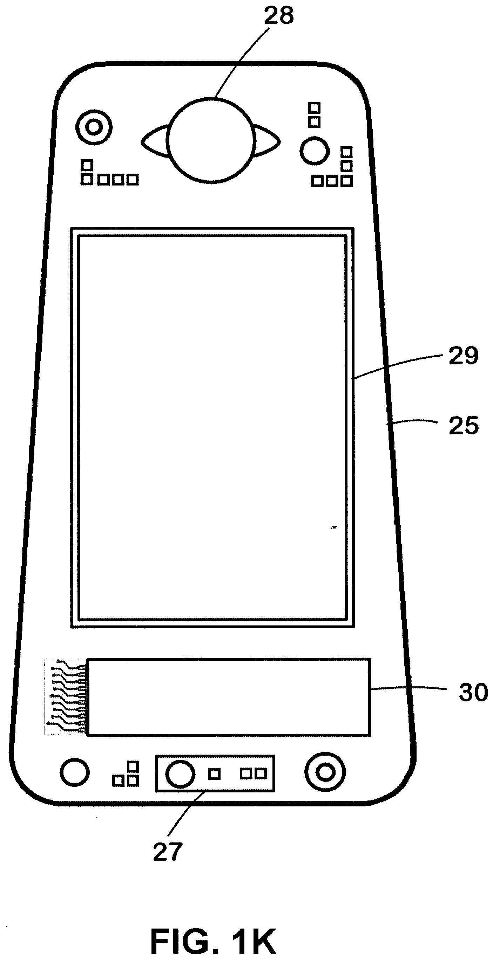

FIG. 1F shows the interior of the front - cover of the device /1/, where the operating printed circuit board /25/ of FIG.1J and FIG.1K is located, together with all electronic components of the device.

FIG. 1G shows how to fasten the back /2/ - bottom of the device to the frame /11/ of a bicycle or an electric bicycle. Two fastening options are available. The first option offers direct mounting on the bicycle frame through openings /13/ using bolts /15/, at the place designated for placement of water bottle cages (since the distance between the openings on the bicycle frame, designated for placement of water bottle cages, is standard and respected by all bicycle manufacturers). The second option offers mounting on the bicycle frame through openings /14/ using a riveted connection /16/. In both options, the operating unit remains inside the device and it is not possible for it or fixation elements to be manipulated in order to be stolen. Both types of mounting can be performed at home or at a shop where bicycles and electric bicycles are sold.

FIG. 1H shows how to fasten the back /2/ - bottom of the device to any flat side of an electric scooter /19/. In this case, an oval part /17/ is used for stability, which is placed between the back /2/ - bottom of the device and the flat side of the electric scooter /19/. Openings /12/ are used to mount the device using rivets or screws /18/. With this type of mounting, the operating unit remains inside the device and it is not possible for it or fixation elements to be manipulated in order to be stolen. This type of mounting can also take place at home or at a shop where electric scooters are sold.

FIG. 1J shows the technical execution of its individual components on the front of the operating printed circuit board /25/, where the device's main processor /20/ controls all components. The device is registered via SIM card /26/. The combined GPS antenna and receiver /24/ are placed at the top of the device for better coverage. To prevent the interaction of the BLUETOOTH /21/ with the GPS antenna, the former is placed at the bottom. Due to the fact that voltaic solar cells - panels /3/ would apply a high voltage, there is a high voltage regulator /22/ placed. It is also necessary to prevent high voltage to enter the processor and other electronic components in the event that the device is attacked with electric shock. In order to enter additional data to identify ownership of the object, in the device there is a memory /23/ embedded. Data (such as name, address, phone number, e-mail, etc.) can be entered in the memory /23/. It can also be entered in the SIM card used by the device if there is enough free space in it.

FIG. 1K shows how the individual components on the back of the operating printed circuit board /25/ are technically executed, where the main battery /29/ is a cellular antenna /30/, /28/ is a shock sensor and /27/ is a temperature sensor at the bottom of the device next to the locking mechanism for instantaneous reaction in case of a nitrogen attack thereon.

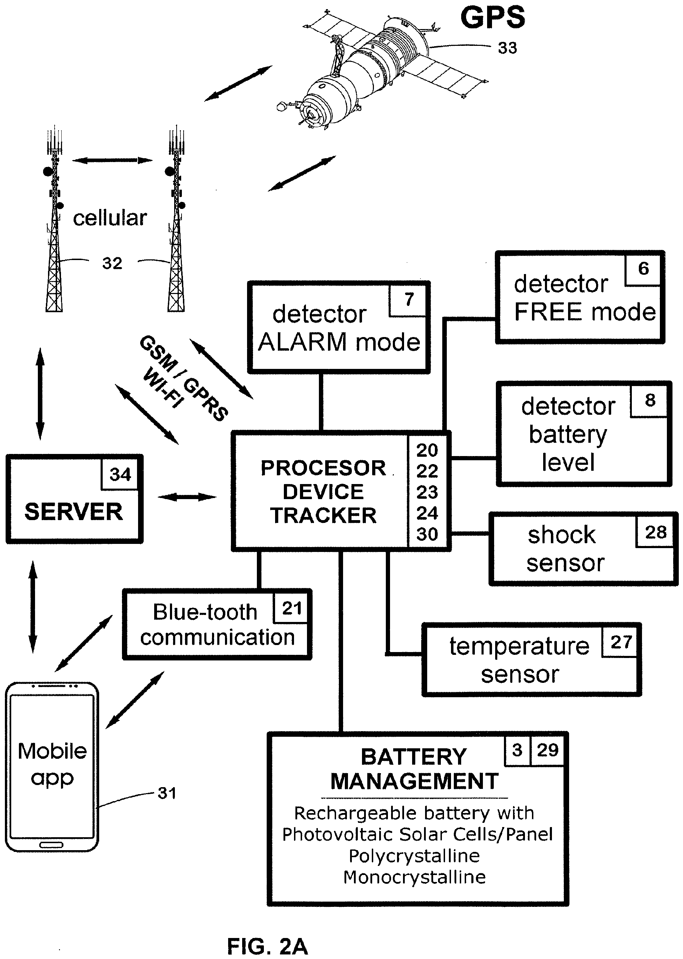

The scheme in FIG. 2A shows the principle of operation and the interaction between all device's elements /3,6,7,8,20,21,22,23,24,27,28,29,30/. Using BLUETOOTH /21/ via a controlled access password operation modes are activated through an Android-supported mobile app for smartphone and tablet /31/ - Google Play / IOS - App Store. The device's location is determined via SMS through the GSM cellular network /32/, the GPRS standard of the GSM cellular network /32/ or via WiFi of the cellular GSM network /32/ with requests through GPS (Global Positioning System) /33/, and the oordinates return to a server /34/ via Wi-Fi wireless connection, and are reflected in a topographical software such as GOOGLE EARTH. From there the coordinates are again sent via a Wi-Fi wireless connection to an authorized user or to a mobile application run on a smartphone or tablet /31/. An authorized user may be the owner of the object - bicycle, electric bicycle and electric scooter, or his authorized representative.

The scheme in FIG. 2B shows in detail the principle of operation of the device /35/ which can be mounted on a bicycle, electric bicycle or electric scooter /36/.

## Claims

1. A waterproof and shock-resistant device for real-time tracking of the location and anti-theft protection of objects - bicycles, electric bicycles and electric scooters, which includes:
• two independent components, the back - bottom of the device and the front - cover of the device, connected to one another at one end by a hinge connection, and at the other end by a locking mechanism with a lock.
• Front - cover of the device with mounted voltaic solar photocells
• Back - bottom of the device, fixed to the frame by means of bolts or rivets.
• oval shape at the back - bottom of the device offering universal fixing to frames of any size and model.
• combined power supply via voltaic solar photocells and autonomous rechargeable battery with battery charge level indicator.

2. Device according to claim 1, **characterized in that** it has a robust housing fixed to the frame - the body of the object by means of bolts or rivets.

3. Device according to claim 1, **characterized in that** it is waterproof and shock-resistant, and has a high degree of protection against vulnerability and impact.

4. Device according to claim 1, **characterized in that** it contains a vibration and shock sensor that responds when the object is in motion.

5. Device according to claim 1, **characterized in that** it contains a temperature sensor that responds to a possible nitrogen attack aimed at breaking the housing of the device.

6. Device according to claim 1, **characterized in that** it has a BLUETOOTH hardware by means of which the FREE and ALARM operation modes are activated through a mobile application for smartphone or tablet as well as a password for controlled access.

7. Device according to claim 1, **characterized in that** it identifies ownership of the object by means of data stored in the memory of the device or in the SIM card it uses.

8. Device according to claim 1, **characterized in that** an authorized user can control it via BLUETOOTH, after which the device sends a response to a web server where the authorized user can review the information online.

9. A method for real-time tracking of objects, which includes:
• when receiving signals from the integrated sensors by a device tracking command, the authorized user of an object such as bicycle, electric bicycle and electric scooter is notified by the server via an SMS text message, e-mail or other protocol, and a warning is sent to the authorized user, police or partner database.
• information management through a server that supports access to a great number of authorized users of bicycles, electric bicycles and electric scooters.
• an authorized user can be the owner or his authorized representative.
